# FASCICULE DE BREVET EUROPEEN

(11) **EP 1 000 785 B1**
(45) Date de publication et mention de la délivrance du brevet: **15.11.2006**
(21) Numéro de dépôt: 99121251.5
(22) Date de dépôt: 25.10.1999
(51) Int. Cl.: B60H 1/00, H01H 19/14

(54) **Dispositif de commande à boutons rotatifs coaxiaux pour un tableau de commande, en particulier de véhicule automobile**
Betätigungseinrichtung mit koaxial drehenden Knöpfen für ein Steuerpult, insbesondere für Kraftfahrzeug
Control device with coaxially rotating knobs for a control board, especially for automotive vehicle

(30) Priorité: 13.11.1998 FR 9814281
(43) Date de publication de la demande: 17.05.2000
(73) Titulaire: VALEO SYSTEMES THERMIQUES, 78321 Le Mesnil St Denis Cedex (FR)
(72) Inventeur: Lacroix, Louis Jean-Michel, 94500 Champigny Sur Marne (FR)
(74) Mandataire: Léveillé, Christophe

(56) Documents cités:
- EP-A- 0 170 155
- DE-A- 3 434 302
- DE-A- 19 650 920
- US-A- 4 995 554

## Description

L'invention se rapporte aux tableaux de commande, en particulier pour les équipements de véhicule automobile.

Elle concerne plus particulièrement un dispositif de commande à boutons rotatifs coaxiaux pour un tableau de commande, du type comprenant un bouton extérieur et un bouton intérieur calés respectivement sur un arbre extérieur et sur un arbre intérieur suivant une direction coaxiale pour entraîner au moins deux organes de commande.

On connaît déjà, en particulier d'après les publications de brevets FR 2 693 408, US 5 093 764 et US 4 995 554, des dispositifs de commande de ce type qui sont utilisés par exemple dans un tableau de commande associé à un équipement de véhicule automobile, en particulier à une installation de chauffage et/ou climatisation.

Dans les tableaux de commande de ce type, les deux boutons coaxiaux traversent une façade du tableau de commande et actionnent, par l'intermédiaire de mécanismes encombrants, des organes de commande, encore appelés actionneurs. Ces organes peuvent être de type mécanique, comme par exemple des leviers servant à actionner des câbles de commande aboutissant à l'équipement considéré, ou encore de type électrique, comme par exemple des interrupteurs.

L'un des inconvénients de ces dispositifs de commande connus réside dans le fait que les mécanismes utilisés pour procurer une transmission de mouvement entre les boutons coaxiaux d'une part, et les organes de commande, d'autre part, possèdent un encombrement important, notamment en façade.

L'invention a notamment pour but de surmonter cet inconvénient.

Elle vise en particulier à procurer un dispositif de commande à boutons rotatifs coaxiaux propres à actionner au moins deux organes de commande par l'intermédiaire d'une cinématique de commande possédant un faible encombrement, notamment en façade.

Elle propose à cet effet un dispositif de commande à boutons rotatifs coaxiaux du type défini en introduction, dans lequel l'arbre intérieur et l'arbre extérieur sont couplés chacun à au moins un des organes de commande par l'intermédiaire d'un train d'engrenages coniques.

Il en résulte que les boutons rotatifs coaxiaux du dispositif de l'invention utilisent des cinématiques à trains d'engrenages coniques qui peuvent être superposés, ce qui permet de réduire l'encombrement et donc la dimension de la façade.

Chaque train d'engrenages coniques comprend un pignon conique menant calé sur l'arbre extérieur, respectivement sur l'arbre intérieur, et au moins un pignon conique mené, monté en prise avec le pignon conique menant et couplé à un organe de commande.

Avantageusement, chaque train d'engrenages coniques est propre à assurer un renvoi d'angle de valeur choisie. De préférence, cette valeur est sensiblement égale à 90°.

Dans une autre caractéristique de l'invention, les organes de commande sont montés à rotation suivant des axes de rotation dont les directions angulaires mutuelles sont choisies.

De préférence, les organes de commande sont montés à rotation suivant des axes de rotation coaxiaux.

Toutefois, il est possible aussi de disposer les axes de rotation respectifs des organes de commande dans des directions non coaxiales, en fonction de chaque cas particulier.

Dans une forme de réalisation préférée, le dispositif comprend deux organes de commande montés coaxialement en faisant un angle de 90° par rapport à la direction axiale commune de l'arbre extérieur et de l'arbre intérieur.

Selon encore une autre caractéristique de l'invention, l'un au moins des organes de commande est un levier pour la commande d'un câble.

Le bouton extérieur est avantageusement guidé sur une façade du tableau de commande, tandis que le bouton intérieur est guidé par le bouton extérieur.

Dans la description qui suit, faite à titre d'exemple, on se réfère au dessin annexé, sur lequel :
- la figure 1 est une vue de face d'un dispositif de commande à boutons rotatifs coaxiaux selon l'invention ;
- la figure 2 est une vue en coupe selon la ligne II-II de la figure 1 ; et
- la figure 3 est une vue en coupe selon la ligne III-III de la figure 2.

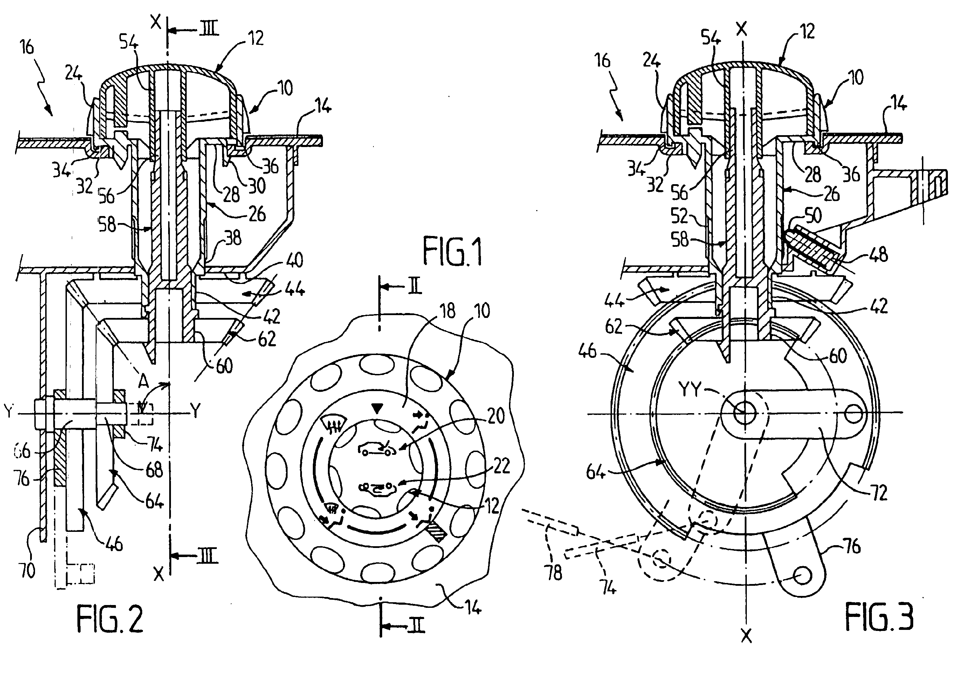

Le dispositif de commande représenté aux figures 1 à 3 comprend deux boutons rotatifs coaxiaux : un bouton extérieur 10 et un bouton intérieur 12 faisant saillie d'une façade 14, encore appelée "face avant", faisant partie d'un tableau de commande 16 associé à un équipement de véhicule automobile.

Dans l'exemple, le tableau de commande 16 est associé à une installation de chauffage et/ou climatisation de l'habitacle d'un véhicule automobile.

Le bouton extérieur 10 (figure 1) est propre à commander l'installation pour la placer dans une configuration de distribution choisie, comme représenté par des pictogrammes situés dans une couronne 18 placée entre les boutons 10 et 12. Ces configurations de distribution correspondent à des modes classiques du type aération, chauffage, etc.

Le bouton intérieur 12 est propre à actionner l'installation pour la placer dans l'un ou l'autre de deux états correspondant respectivement à une fonction "air extérieur" et à une fonction "air recirculé" comme représenté par les pictogrammes 20 et 22 que comporte le bouton 12.

Le bouton extérieur 10 comprend (figures 2 et 3) une couronne moletée 24 qui fait saillie de la façade 14 et qui est destinée à être actionnée en rotation par l'utilisateur. Cette couronne 24 est réalisée monobloc avec un arbre extérieur 26 qui traverse la façade suivant un axe XX. La couronne 24 se raccorde à l'arbre 26 par une partie annulaire 28, laquelle présente une dent d'encliquetage 30, formant butée de retenue, venant coopérer avec une bordure annulaire 32 de la façade 14. Cette dernière ménage une gorge périphérique 34 dans laquelle s'engage un rebord inférieur 36 de la couronne 24. Le bouton extérieur 10 est ainsi guidé par la façade 14.

A son autre extrémité, l'arbre intérieur 26 traverse une ouverture circulaire 38 ménagée dans une paroi 40 située à distance de la façade. L'arbre extérieur 26 comporte une extrémité 42 sur laquelle est calé un pignon conique menant 44 propre à engrener avec un pignon conique mené 46 monté à rotation autour d'un axe YY en formant un renvoi d'angle A de 90° par rapport à l'axe XX.

La paroi 40 du tableau de commande est traversée par un pointeau 48 (figure 3) dont l'extrémité 50 s'engage dans des crans 52 réalisés en périphérie de l'arbre 26 pour procurer un plongeur de crantage. Ceci permet de maintenir le bouton extérieur 10 dans une position de réglage prédéfinie.

Dans l'exemple, le bouton intérieur 12, qui commande la recirculation de l'air, ne nécessite pas de crantage. Cependant, dans le cas où ce bouton intérieur commande une autre fonction (commutateur de ventilation, distribution, température de chauffage), il faudra prévoir un crantage soit directement sur la commande, comme c'est le cas ici pour la commande extérieure (décalée ou dans l'axe de commande), soit sur l'organe commandé (par exemple un levier de commande de câble ou un commutateur dans le cas de la ventilation).

Le bouton intérieur 12 est guidé intérieurement par la couronne 24 du bouton extérieur 10. Le bouton 12 comprend un fût 54 dans lequel est emboîtée l'extrémité 56 d'un arbre intérieur 58 qui s'étend coaxialement à l'arbre extérieur 26 et qui traverse ce dernier de part en part. L'arbre 58 comporte une extrémité opposée 60 qui fait saillie au-delà de l'arbre 26 et sur laquelle est calé en rotation un pignon conique menant 62 propre à engrener avec un pignon conique mené 64 qui s'étend coaxialement au pignon conique mené 46. Les pignons 46 et 64 sont couplés à des arbres respectifs 66 et 68 qui s'étendent perpendiculairement à une paroi 70 du tableau de commande, laquelle s'étend perpendiculairement à la façade 16.

Dans l'exemple représenté, les pignons coniques 44, 46, 62 et 64 sont des pignons dentés dont la denture ne s'étend pas sur une circonférence complète, mais il pourrait en être autrement.

Comme on peut le voir sur la figure 2, les pignons 46 et 64 sont situés dans des plans parallèles et tous deux d'un même côté de l'axe XX.

Le pignon 64 est solidaire d'un levier 72 propre à actionner un câble de commande 74, tandis que le pignon 46 est solidaire d'un levier de commande 76 propre à actionner un câble de commande 78 (figure 3). Les leviers 72 et 76 sont placés sur des faces opposées des pignons 46 et 64 (figure 2) c'est-à-dire qu'ils encadrent les deux pignons.

Ainsi, les boutons 10 et 12 offrent deux commandes indépendantes et concentriques qui permettent de commander les leviers 72 et 76 par des cinématiques à pignons coniques présentant un faible encombrement, notamment en façade, ce qui permet de réaliser un tableau de commande occupant une place restreinte sur la planche de bord du véhicule.

Bien entendu, l'invention n'est pas limitée à la forme de réalisation décrite précédemment à titre d'exemple et de nombreuses variantes peuvent être réalisées.

C'est Ainsi que l'on comprendra que les pignons menés 46 et 64 ne sont pas nécessairement placés l'un à côté de l'autre dans une disposition coaxiale. Ces deux pignons peuvent être coaxiaux en étant disposés d'un même côté de l'axe de rotation XX des boutons ou encore disposés des deux côtés opposés de cet axe de rotation.

Il est possible aussi de disposer les pignons 46 et 64 suivant des directions non coaxiales et faisant entre eux un angle choisi, par exemple de 90°.

Egalement, on comprendra que chacun des pignons menants 44 et 62 peut entraîner un ou plusieurs pignons menés.

Par ailleurs, les pignons coniques peuvent être constitués par des roues complètes d'engrenage complètes ou partielles.

Egalement, la réalisation des engrenages coniques selon l'invention est susceptible de nombreuses variantes, sans être limitée à des pignons coniques. En particulier, il est envisageable de réaliser le renvoi d'angle par d'autres types d'engrenages, par exemple par des ensembles à roue et vis sans fin.

De plus, le renvoi d'angle procuré par les trains d'engrenages coniques de l'invention n'est pas limité à une valeur angulaire de 90°.

Enfin, bien que l'invention ait été décrite en référence particulière à une installation de chauffage et/ou de climatisation de l'habitacle d'un véhicule automobile, elle peut être utilisée dans d'autres types d'équipements de véhicules automobiles.

En outre, il est à noter que les organes de commande à entraîner ne sont pas nécessairement des organes de type mécanique, mais peuvent être aussi des organes de type électrique.

## Revendications

1. Dispositif de commande à boutons rotatifs coaxiaux pour un tableau de commande, en particulier pour un équipement de véhicule automobile, comprenant un bouton extérieur (10) et un bouton intérieur (12) calés respectivement sur un arbre extérieur (26) et sur un arbre intérieur (58) suivant une direction coaxiale (XX) pour entraîner au moins deux organes de commande (72, 76),
**caractérisé en ce que** l'arbre extérieur (26) et l'arbre intérieur (58) sont couplés chacun à au moins un des organes de commande (72, 76) par l'intermédiaire d'un train d'engrenages coniques (44, 46 ; 62, 64) de telle sorte que chaque train d'engrenages coniques comprend un pignon conique menant (44 ; 62) calé sur l'arbre extérieur (26), respectivement l'arbre intérieur (68), et au moins un pignon conique mené (46 ; 64), monté en prise avec le pignon conique menant et couplé à l'organe de commande (72 ; 76).

2. Dispositif selon la revendication 1, **caractérisé en ce que** chaque train d'engrenages coniques (44, 46 ; 62, 64) est propre à assurer un renvoi d'angle (A) de valeur choisie.

3. Dispositif selon la revendication 2, **caractérisé en ce que** la valeur du renvoi d'angle (A) est sensiblement égale à 90°.

4. Dispositif selon l'une des revendications 1 à 3, **caractérisé en ce que** les organes de commande (72 ; 76) sont montés à rotation suivant des axes de rotation dont les directions angulaires mutuelles sont choisies.

5. Dispositif selon l'une des revendications 1 à 4, **caractérisé en ce que** les organes de commande (72 ; 76) sont montés à rotation suivant des axes de rotation coaxiaux (YY).

6. Dispositif selon l'une des revendications 1 à 5, **caractérisé en ce qu'**il comprend deux organes de commande (72, 76) montés coaxialement (YY) en faisant un angle de 90° par rapport à la direction axiale commune (XX) de l'arbre extérieur (26) et de l'arbre intérieur (58).

7. Dispositif selon l'une des revendications 1 à 6, **caractérisé en ce que** l'un au moins des organes de commande (72, 76) est un levier pour la commande d'un câble (74, 78).

8. Dispositif selon l'une des revendications 1 à 7, **caractérisé en ce que** le bouton extérieur (10) est guidé sur une façade (14) du tableau de commande (16), tandis que le bouton intérieur (12) est guidé par le bouton extérieur (10).

9. Dispositif selon l'une des revendications 1 à 8, **caractérisé en ce qu'**il comprend deux pignons menés (46, 64) placés dans une disposition coaxiale.

10. Dispositif selon l'une des revendications 1 à 9, **caractérisé en ce que** les pignons menés (46, 64) sont disposés d'un même coté de la direction coaxiale (XX).

## Claims

1. Coaxial rotary button control device for a control panel, particularly for an item of equipment for a motor vehicle, comprising an outer button (10) and an inner button (12) secured respectively to an outer shaft (26) and to an inner shaft (58) in a coaxial direction (XX) to operate at least two control members (72, 76),
**characterized in that** the outer shaft (26) and the inner shaft (58) are each coupled to at least one of the control members (72, 76) by means of a bevel gear train (44, 46; 62, 64) so that each bevel gear train comprises one drive bevel gear (44; 62) secured to the outer shaft (26), respectively the inner shaft (68), and at least one driven bevel gear (46; 64), mounted in gear with the drive bevel gear and coupled to the control member (72; 76).

2. Device according to Claim 1, **characterized in that** each bevel gear train (44, 46; 62, 64) is suitable for providing an angle transmission (A) of a chosen value.

3. Device according to Claim 2, **characterized in that** the value of the angle transmission (A) is substantially equal to 90°.

4. Device according to one of Claims 1 to 3, **characterized in that** the control members (72; 76) are mounted in rotation along axes of rotation whose mutual angular directions are chosen.

5. Device according to one of Claims 1 to 4, **characterized in that** the control members (72; 76) are mounted in rotation along coaxial axes of rotation (YY).

6. Device according to one of Claims 1 to 5, **characterized in that** it comprises two control members (72, 76) mounted coaxially (YY) making an angle of 90° relative to the common axial direction (XX) of the outer shaft (26) and of the inner shaft (58).

7. Device according to one of Claims 1 to 6, **characterized in that** at least one of the control members (72, 76) is a lever for the control of a cable (74, 78).

8. Device according to one of Claims 1 to 7, **characterized in that** the outer button (10) is guided on a façade (14) of the control panel (16), while the inner button (12) is guided by the outer button (10).

9. Device according to one of Claims 1 to 8, **characterized in that** it comprises two driven gears (46, 64) placed in a coaxial arrangement.

10. Device according to one of Claims 1 to 9, **characterized in that** the driven gears (46, 64) are placed on one and the same side of the coaxial direction (XX).

## Patentansprüche

1. Steuervorrichtung mit koaxialen Drehknöpfen für ein Bedienungsfeld, insbesondere für eine Kraftfahrzeugausrüstung, mit einem äußeren Knopf (10) und einem inneren Knopf (12), die auf einer äußeren Welle (26) bzw. einer inneren Welle (58) in koaxialer Richtung (XX) festgeklemmt sind, um mindestens zwei Steuerorgane (72, 76) anzutreiben, **dadurch gekennzeichnet, dass** die äußere Welle (26) und die innere Welle (58) jeweils mit mindestens einem der Steuerorgane (72, 76) über einen Kegelradtrieb (44, 46; 62, 64) derart gekoppelt sind, dass jeder Kegelradtrieb ein Antriebskegelrad (44; 62), das auf der äußeren Welle (26) bzw. auf der inneren Welle (68) festgeklemmt ist, und mindestens ein angetriebenes Kegelrad (46; 64) aufweist, das in Eingriff mit dem Antriebskegelrad montiert und mit dem Steuerorgan (72; 76) gekoppelt ist.

2. Vorrichtung nach Anspruch 1, **dadurch gekennzeichnet, dass** jeder Kegelradantrieb (44, 46; 62, 64) in der Lage ist, eine Kegelradübersetzung (A) mit einem gewählten Wert zu gewährleisten.

3. Vorrichtung nach Anspruch 2, **dadurch gekennzeichnet, dass** der Wert der Kegelradübersetzuäg (A) im Wesentlichen gleich 90° ist.

4. Vorrichtung nach einem der Ansprüche 1 bis 3, **dadurch gekennzeichnet, dass** die Steuerorgane (72; 76) gemäß Drehachsen drehbar montiert sind, deren gegenseitige Winkelrichtungen ausgewählt werden.

5. Vorrichtung nach einem der Ansprüche 1 bis 4, **dadurch gekennzeichnet, dass** die Steuerorgane (72; 76) gemäß koaxialen Drehachsen (YY) drehbar montiert sind.

6. Vorrichtung nach einem der Ansprüche 1 bis 5, **dadurch gekennzeichnet, dass** sie zwei Steuerorgane (72, 76) aufweist, die koaxial (YY) montiert sind, indem sie einen Winkel von 90° bezüglich der gemeinsamen axialen Richtung (XX) der äußeren Welle (26) und der inneren Welle (58) bilden.

7. Vorrichtung nach einem der Ansprüche 1 bis 6, **dadurch gekennzeichnet, dass** mindestens eines der Steuerorgane (72, 76) ein Hebel zur Steuerung eines Kabels (74, 78) ist.

8. Vorrichtung nach einem der Ansprüche 1 bis 7, **dadurch gekennzeichnet, dass** der äußere Knopf (10) auf einer Fassade (14) des Bedienungsfelds (16) geführt wird, während der innere Knopf (12) vom äußeren Knopf (10) geführt wird.

9. Vorrichtung nach einem der Ansprüche 1 bis 8, **dadurch gekennzeichnet, dass** sie zwei angetriebene Getrieberäder (46, 64) aufweist, die koaxial angeordnet sind.

10. Vorrichtung nach einem der Ansprüche 1 bis 9, **dadurch gekennzeichnet, dass** die angetriebenen Getrieberäder (46, 64) auf der gleichen Seite der koaxialen Richtung (XX) angeordnet sind.
